(19) Europäisches Patentamt
European Patent Office
Office européen des brevets

(11) **EP 3 283 850 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(21) Anmeldenummer: **16716567.9**

(22) Anmeldetag: **15.04.2016**

(51) Int Cl.:
***G01D 5/14*** *(2006.01)*

(86) Internationale Anmeldenummer:
**PCT/EP2016/058310**

(87) Internationale Veröffentlichungsnummer:
**WO 2016/166265 (20.10.2016 Gazette 2016/42)**

(54) **HALLSENSOR**

HALL SENSOR

CAPTEUR À EFFET HALL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2015 DE 102015105854**

(43) Veröffentlichungstag der Anmeldung:
**21.02.2018 Patentblatt 2018/08**

(73) Patentinhaber: **Max Baermann GmbH**
**51429 Bergisch-Gladbach (DE)**

(72) Erfinder: **SCHLIESCH, Thomas**
**51515 Kürten (DE)**

(74) Vertreter: **Lippert Stachow Patentanwälte Rechtsanwälte**
**Partnerschaft mbB**
**Frankenforster Strasse 135-137**
**51427 Bergisch Gladbach (DE)**

(56) Entgegenhaltungen:
**EP-A1- 2 077 438          EP-A1- 2 846 136**
**DE-A1-102013 205 313    US-A1- 2015 022 192**

**Beschreibung**

Die Erfindung betrifft eine Sensoranordnung zum Bestimmen einer Winkelposition eines Rotors relativ zu einem Stator gemäß dem Oberbegriff von Anspruch 1 sowie ein Verfahren zum Bestimmen einer Winkelposition eines Rotors relativ zu einem Stator mittels einer Sensoranordnung.

Gattungsgemäße Sensoranordnungen werden dazu verwendet, die Winkelposition eines Rotors relativ zu einem Stator berührungsfrei zu bestimmen. Allgemein sind Rotor und Stator Bauteile, die um eine Rotationsachse zueinander drehbar sind. Beispielsweise kann es sich bei dem Rotor um eine Welle und bei dem Stator um ein Lagergehäuse handeln. Beispielsweise kann der Rotor um die Rotationsachse drehbar sein, während der Stator feststeht, so dass sich der Rotor zum Stator um die Rotationsachse drehen kann. Beispielsweise können sowohl Stator als auch Rotor um dieselbe Rotationsachse drehbar sein, wobei der Rotor zum Stator um die Rotationsachse drehbar ist. Die Winkelposition des Rotors relativ zum Stator ist über einen Winkel definiert, um den der Rotor um die Rotationsachse relativ zum Stator gedreht ist. Gattungsgemäße Sensoranordnungen sind somit dazu ausgelegt, dass zunächst eine Ausgangswinkelposition des Rotors relativ zum Stator bestimmt werden kann und sodann fortlaufend erfasst werden kann, in welchem Winkel sich der Rotor relativ zum Stator ausgehend von der Ausgangswinkelposition befindet, wobei der Winkel zwischen 0 und $2\pi$ eindeutig angegeben werden kann.

Gattungsgemäße Sensoranordnungen weisen als zwei Bestandteile einen Magneten und einen Sensor auf, wobei einer der Bestandteile an dem Rotor und der andere an dem Stator angeordnet und befestigt werden kann zum berührungslosen Erfassen der Winkelposition des Rotors relativ zum Stator. Dabei ist der Magnet so ausgebildet und relativ zum Sensor angeordnet, dass er an dem Sensor ein Magnetfeld erzeugt, das in Abhängigkeit von dem die Winkelposition bestimmenden Winkel um die Rotationsachse variiert und dabei periodisch verläuft mit einer Periodenlänge, die $2\pi$ oder einen ganzen Bruchteil von $2\pi$ beträgt. Zum eindeutigen Bestimmen der Winkelposition weist darüber hinaus der Sensor üblicherweise mehrere Sensorelemente auf, die jeweils zum Ermitteln der an ihnen anliegenden Magnetfeldstärke ausgebildet sind, wobei die exakte Winkelposition durch Vergleichsmessungen der verschiedenen Sensorelemente des Sensors erreicht wird. Dabei werden die Sensorelemente des Sensors an unterschiedlichen Positionen relativ zum Magneten angeordnet, so dass sie in Abhängigkeit von der Lage des Magneten, d. h. seines Winkels um die Rotationsachse, jeweils eine unterschiedliche Magnetfeldstärke messen, so dass über Vergleichsmessung, d. h. ein Vergleich der verschiedenen Messwerte, die aus verschiedenen Sensorelementen ausgelesen werden, eine besonders präzise Bestimmung der Winkelposition anhand der Sensoranordnung theoretisch ermöglicht ist.

Im Stand der Technik sind verschiedene Ausgestaltungen des Magneten und des Sensors gattungsgemäßer Sensoranordnungen bekannt. Als Magnete werden zumeist mehrpolige Ringmagnete eingesetzt (siehe z. B. die Sensoranordnungen gemäß WO 2014/029885 A1 oder gemäß DE 11 2007 003 276 T5), da über solche Magnete auf einfache Weise ein Magnetfeld bereitgestellt werden kann, dessen Magnetfeldstärke in Abhängigkeit von dem Winkel um die Rotationsachse mit kurzen Periodenlängen periodisch variiert. Dies ist für die möglichst präzise Bestimmung des Winkels, und damit bei dem Einsatz an Rotor und Stator der Winkelposition des Rotors relativ zum Stator, besonders vorteilhaft. Bei herkömmlichen Sensoranordnungen wird dabei üblicherweise der Magnet an der Stirnseite des Rotors, d. h. an einer Seite des Rotors, durch die die Rotationsachse tritt, angeordnet, wobei der Sensor entlang der Rotationsachse geringfügig von dem Magneten und der Stirnseite des Rotors beabstandet angeordnet wird, so dass über den Sensor das Magnetfeld besonders gut erfasst werden kann und entsprechend auch die Variation des Magnetfelds in Abhängigkeit von dem Winkel des Magneten um die Rotationsachse. Ein grundlegendes Problem herkömmlicher Sensoranordnungen besteht jedoch darin, dass bei den Einsatzorten der Sensoranordnungen zumeist nicht die Präsenz von externen Magnetfeldern (Störmagnetfelder) ausgeschlossen werden kann, so dass die Bestimmung der Winkelposition über Vergleichsmessungen anhand mehrerer Sensorelemente oft fehlerhaft ist, da an verschiedenen Sensorelementen das externe Magnetfeld unterschiedliche externe Magnetfeldstärken aufweist, so dass die unterschiedlichen Messwerte zu der Magnetfeldstärke, die aus unterschiedlichen Sensorelementen ausgelesen werden, nicht nur durch die Lage des Magneten der Sensoranordnung zum jeweiligen Sensorelement sondern auch durch das externe Magnetfeld hervorgerufen werden. Diesem Problem des Einflusses eines externen Magnetfelds wird beispielsweise in dem Dokument US 2015/0022192 A1 dadurch Rechnung getragen, dass Gradienten von unterschiedlichen Magnetfeldkomponenten ermittelt werden und diese zueinander in ein Verhältnis gesetzt werden, wobei die Winkelposition anhand dieses Verhältnisses ermittelt wird.

Diesem Problem wird bei der Sensoranordnung gemäß WO 2014/029885 A1 dadurch begegnet, dass der Sensor der Sensoranordnung entlang der Rotationsachse gegenüber einem als mehrpoliger Ringmagnet ausgebildeten Magneten und radial innerhalb dieses Magneten angeordnet wird, wobei der Sensor zwei Sensorpaare aufweist, die jeweils zwei Sensorelemente umfassen, wobei sämtliche Sensorelemente auf einem Kreis um die Rotationsachse radial innerhalb des Ringmagneten angeordnet sind und die Sensorelemente eines Sensorpaares achsensymmetrisch zur Rotationsachse einander gegenüberliegend angeordnet sind. Dabei sind sämtliche Sensorelemente dazu ausgebildet, die Feldkomponente des von dem Magneten bereitgestellten Magnetfelds entlang der Rotationsachse zu ermitteln, wobei die einander gegenüberliegenden Sensorelemente eines Sensorpaares zueinander entgegengesetzt ausgerichtet sind. Durch Summenbildung der Messwerte der Sensorelemente eines Sensorpaares kann somit ein externes Magnetfeld unter der Voraussetzung herausgemittelt werden, dass das externe Magnetfeld an beiden Sensorelementen gleich ist. Voraussetzung für eine fehlerfreie Funktionalität der beschriebenen Sensoranordnung ist dabei stets, dass die Sensorelemente eines Sensorpaares möglichst nah aneinander und radial innerhalb des Ringmagneten angeordnet sind, denn nur dann kann ein externes Magnetfeld durch Summenbildung der Messwerte der Sensorelemente des Sensorpaares zuverlässig herausgemittelt werden und gleichzeitig wegen der dann gegebenen Winkelabhängigkeit des Magnetfelds eine fehlerfreie Bestimmung des Winkels des Magneten um die Rotationsachse erfolgen. Dabei können die Sensorelemente dann innerhalb eines radialen Bereichs um die Rotationsachse angeordnet werden, in dem sich die Magnetfeldstärke entlang der Rotationsachse monoton verändert, wodurch auch bei einer geringfügigen Lageverschiebung des Sensors relativ zum Magneten eine zuverlässige Bestimmung des Winkels des Magneten um die Rotationsachse ermöglicht ist. Ein besonderer Nachteil der beschriebenen Sensoranordnungen besteht somit darin, dass die Sensoranordnungen zwingend an der Stirnseite eines Rotors angeordnet werden müssen, damit eine fehlerfreie Bestimmung der Winkelposition erfolgen kann. Eine von der Rotationsachse radial weit entfernte Anordnung der Sensoranordnung, beispielsweise an der radialen Außenseite eines Rotors, ist nicht möglich.

Der vorliegenden Erfindung liegt die Aufgabe zugrunde, eine Sensoranordnung bereitzustellen, die möglichst vielseitig einsetzbar ist und zum möglichst präzisen Bestimmen der Winkelposition eines Rotors relativ zu einem Stator geeignet ist und die insbesondere zumindest einen der oben beschriebenen Nachteile bekannter Sensoranordnungen behebt. Der Erfindung liegt ferner die Aufgabe zugrunde, ein Verfahren zum Bestimmen der Winkelposition eines Rotors relativ zu einem Stator mittels einer Sensoranordnung bereitzustellen, das möglichst einfach und präzise durchführbar ist und insbesondere zumindest einen der oben beschriebenen Nachteile bekannter Verfahren behebt.

Als eine Lösung der genannten technischen Aufgabe schlägt die Erfindung eine Sensoranordnung mit den Merkmalen gemäß Anspruch 1 vor. Die Sensoranordnung umfasst zwei Bestandteile, nämlich einen Magneten und einen Sensor. Die Bestandteile sind um eine Rotationsachse zueinander drehbar angeordnet. Beispielsweise kann der Sensor von dem Magneten entlang der Rotationsachse beabstandet sein, beispielsweise um wenige Millimeter beabstandet. Der Sensor weist ein erstes und ein zweites Sensorpaar auf, wobei erstes und zweites Sensorpaar jeweils ein erstes und ein zweites Sensorelement aufweisen. Jedes Sensorelement ist zum Bestimmen einer Magnetfeldkomponente in genau einer vorgegebenen Richtung ausgebildet und somit gibt jedes der Sensorelemente einen Messwert aus, der proportional zu der Magnetfeldkomponente in dieser Richtung ist. Die Sensoranordnung weist eine Recheneinheit zum Ermitteln der Winkelposition auf, die dazu ausgebildet ist, aus den Sensorelementen die Messwerte zu ermitteln, die jeweils proportional zu der Magnetfeldkomponente in der vorbestimmten Richtung des bei dem jeweiligen Sensorelement vorhandenen Magnetfelds sind. Erfindungsgemäß ist jedem Sensorpaar eine Gerade zugeordnet, entlang der die zwei Sensorelemente liegen und die die Rotationsachse schneidet. Jedes der Sensorelemente ist somit dazu ausgebildet, die Magnetfeldstärke eines Magnetfelds in einem räumlichen Bereich zu bestimmen, dessen räumlicher Mittelpunkt im Wesentlichen auf der Gerade liegt. Zumindest eine, insbesondere sämtliche der den Sensorpaaren zugeordneten Geraden können senkrecht zur Rotationsachse verlaufen. Besonders bevorzugt weisen sämtliche Geraden denselben Winkel zur Rotationsachse auf. Erfindungsgemäß weist das erste Sensorelement einen geringeren radialen Abstand zur Rotationsachse auf als das zweite Sensorelement. Dies kann insbesondere für jedes Sensorpaar gelten. Der radiale Abstand bezieht sich auf den Abstand entlang einer Richtung, die senkrecht zur Rotationsachse und durch die Rotationsachse und durch das jeweilige Sensorelement verläuft. Insbesondere liegen bei zumindest einem, insbesondere bei jedem der Sensorpaare beide Sensorelemente an derselben radialen Seite der Rotationsachse. Die dem ersten Sensorpaar zugeordnete Gerade ist dabei von der dem zweiten Sensorpaar zugeordneten Gerade um einen Drehwinkel um die Rotationsachse beabstandet. Dabei sind die Geraden insbesondere so zueinander angeordnet, dass bei einer gedachten Drehung der dem ersten Sensorpaar zugeordneten Gerade um den Drehwinkel um die Rotationsachse die dem ersten Sensorpaar zugeordnete Gerade mit der dem zweiten Sensorpaar zugeordneten Gerade zusammenfällt. Die Recheneinheit ist dazu ausgebildet, zum Eliminieren eines Störeinflusses eines externen Störmagnetfelds durch Subtraktion eines aus dem ersten Sensorelement des ersten Sensorpaares ermittelten Messwerts von einem aus dem zweiten Sensorelement des ersten Sensorpaares ermittelten Messwert einen ersten Differenzwert zu bilden, und durch Subtraktion eines aus dem ersten Sensorelement des zweiten Sensorpaares ermittelten Messwerts von einem aus dem zweiten Sensorelement des zweiten Sensorpaares ermittelten Messwert einen zweiten Differenzwert zu bilden, und aus dem Verhältnis der Differenzwerte die Winkelposition des Rotors relativ zum Stator zu bestimmen.

Die erfindungsgemäße Sensoranordnung ist vielseitig einsetzbar und zu einer besonders präzisen Bestimmung der Winkelposition eines Rotors relativ zu einem Stator geeignet. Durch die über einen Drehwinkel voneinander beabstandete Anordnung zweier Sensorpaare ist ganz prinzipiell die besonders präzise Erfassung der Winkelposition bzw. des Winkels des Magneten um die Rotationsachse ermöglicht. Dadurch, dass jedes Sensorpaar zwei Sensorelemente aufweist, die auf einer Geraden liegen, die durch die Rotationsachse verläuft, und jeweils einen unterschiedlichen Abstand zur Rotationsachse aufweisen, ist darüber hinaus für jedes Sensorpaar ein Wert für das von dem Magneten erzeugte Magnetfeld ohne Einfluss eines externen Magnetfelds bestimmbar, wodurch der Winkel der dem Sensorpaar zugeordneten Gerade möglichst genau bestimmbar ist. Dies ergibt sich aus folgender Überlegung: Das Magnetfeld, das durch einen Magneten bereitgestellt wird, ist präzise berechenbar, wobei insbesondere der von dem radialen Abstand von der Rotationsachse abhängige Verlauf der Magnetfeldstärke berechenbar ist. So ist beispielsweise das durch einige bekannte mehrpolige Ringmagnete, insbesondere durch axial-lateral magnetisierte Ringmagnete, bereitgestellte Magnetfeld dadurch gekennzeichnet, dass der Wert seiner radialen Magnetfeldkomponente in einem Radiusabschnitt zumindest näherungsweise linear zunimmt. Es sind ferner auch andere Magnete mit anderen radialen Abhängigkeiten des Magnetfelds bekannt. Da die radiale Abhängigkeit des Wertes einer Magnetfeldkomponente bekannt ist, lässt sich beispielsweise über Differenzbildung der aus den Sensorelementen eines Sensorpaares gewonnenen Werte der Einfluss eines externen Magnetfelds eliminieren. Dabei können die Sensorelemente an derselben radialen Seite der Rotationsachse und so aneinander angeordnet werden, dass tatsächlich das externe Magnetfeld an beiden Sensorelementen in guter Näherung gleich ist. Eine entsprechende Elimination des externen Magnetfelds kann für jedes Sensorpaar erfolgen. Sodann kann über einen Vergleich der für jedes Sensorpaar gewonnenen Werte der Winkel des Magneten um die Rotationsachse und damit die Winkelposition eines Rotors relativ zu einem Stator um die Rotationsachse sehr präzise ermittelt werden. Zur vielseitigen Anwendbarkeit der erfindungsgemäßen Sensoranordnung trägt insbesondere bei, dass bei der erfindungsgemäßen Sensoranordnung Magnete mit unterschiedlichen Geometrien verwendet werden können und Magnete an unterschiedlichen Stellen an Rotor oder Stator angebracht werden können, beispielsweise an der Stirnseite eines Rotors oder an der radialen Außenseite eines Rotors, wobei die Anordnung der Sensorelemente in Abhängigkeit von der gewählten Anordnung und Ausgestaltung des Magneten erfolgen kann. Da die Sensorelemente eines Sensorpaares jeweils an derselben radialen Seite der Rotationsachse angeordnet werden können und ein sinnvoller Abstand der Sensorelemente jeweils frei gewählt werden kann, ist die erfindungsgemäße Sensoranordnung somit nicht auf konkrete Bauweisen beschränkt sondern kann für verschiedene Bauweisen leicht adaptiert werden, insbesondere für eine stirnseitige Anordnung eines Magneten oder für eine radial außenliegende Anordnung eines Magneten. Damit unterscheidet sich die erfindungsgemäße Sensoranordnung von bekannten Sensoranordnungen. Bekannte Sensoranordnungen wie beispielsweise die Sensoranordnung gemäß WO 2014/029885 A1 sind so ausgebildet, dass die Sensorelemente der Sensoranordnung in radialer Richtung gesehen auf der Rotationsachse des Rotors angeordnet oder zumindest in nur sehr geringem Abstand radial von der Rotationsachse beabstandet sind. Üblicherweise sind die Sensorelemente von der Rotationsachse radial um weniger als 5 mm, zumeist um weniger als 2 mm beabstandet, wobei zumeist ein Magnet mit einem Durchmesser von zwischen 10 und 20 mm um die Rotationsachse vorgesehen wird, damit der Magnet ein ausreichend großes Magnetfeld am Ort der Sensorelemente, der zumindest in der Nähe der Rotationsachse liegt, bereitstellen kann. Daher werden bekannte Sensoranordnungen üblicherweise auch als "On-Axis"-Anordnungen bezeichnet, die stirnseitig an dem Rotor angeordnet sind, d. h. in Richtung der Rotationsachse benachbart zum Rotor und somit in einem Längenabschnitt entlang der Rotationsachse, der außerhalb des Erstreckungsbereichs des Rotors entlang der Rotationsachse liegt. Die erfindungsgemäße Sensoranordnung hingegen stellt Ausführungsformen bereit, die als sogenannte "Off-Axis"-Anordnung verwendet werden können. Denn da die beiden Sensorelemente radial an derselben Seite der Rotationsachse angeordnet werden können, können die Sensorelemente beide von der Rotationsachse um mehr als 10 mm, insbesondere um mehr als 15 mm, beispielsweise zwischen 15 mm und 30 mm beabstandet sein. Entsprechend kann ein Magnet mit einem Durchmesser von über 20 mm, insbesondere von über 30 mm, insbesondere von zwischen 30 mm und 50 mm verwendet werden. Die erfindungsgemäße Sensoranordnung eignet sich somit insbesondere zu einer solchen Verwendung, bei der der Sensor umfassend die Sensorelemente seitlich an dem Rotor oder seitlich an dem Stator angeordnet wird, d. h. an einer beliebigen Position entlang der Rotationsachse. Der Sensor muss somit nicht zwingend stirnseitig zum Rotor angeordnet werden sondern kann seitlich an dem Rotor angeordnet werden. Der Sensor mit den Sensorelementen kann somit beispielsweise radial versetzt zu dem Rotor in einem Längenabschnitt entlang der Rotationsachse angeordnet werden, in dem sich der Rotor entlang der Rotationsachse erstreckt. Dabei kann zumindest bei einigen von der Erfindung umfassten Ausführungsformen der Sensor gleichzeitig sehr klein ausgebildet sein. Somit kann bei entsprechend ausgebildeten Ausführungsformen zum einen die Anordnung der Sensoranordnung an Rotor bzw. Stator platzsparend erfolgen, und zum anderen können die Herstellungskosten und der Materialaufwand bei der Herstellung der Sensoranordnung geringgehalten sein. Dies beruht darauf, dass die Sensorelemente eines Sensorpaares jeweils an einer radialen Seite der Rotationsachse, und somit seitlich an dem Rotor angeordnet werden können, so dass keine sich umfänglich um die Rotationsachse erstreckende Vorrichtung zur Realisierung des Sensors der Sensoranordnung erforderlich ist. Insbesondere können sämtliche Sensorpaare so ausgebildet sein, dass ihre Sensorelemente jeweils an einer radialen Seite der Rotationsachse angeordnet sind. Darüber hinaus kann der Drehwinkel zwischen den Geraden von zwei benachbarten Sensorpaaren sehr geringgehalten sein, was eine platzsparende und materialschonende Ausbildung der Sensoranordnung weiter begünstigt. Besonders vorteilhaft ist, als Magnet einen N-poligen Magneten vorzusehen. Erfindungsgemäß kann ein Magnet mit mindestens zwei, insbesondere mit mehr als zwei Polen, insbesondere mit einer geraden Anzahl an Polen vorgesehen sein. Je höher die Polzahl, desto geringer kann der Drehwinkel gewählt werden. Dabei ist stets wesentlich, dass die beiden benachbarten Sensorpaare auf Geraden liegen, die um einen solchen Drehwinkel voneinander beabstandet sind, dass sie unterschiedliche Phasen des von dem Magneten erzeugten Magnetfelds messen. Bei dem Vorsehen eines N-poligen Magneten ist besonders bevorzugt vorgesehen, dass der Drehwinkel, um den die Geraden zweier benachbarter Sensorpaare voneinander beabstandet sind, weniger als $\dfrac{2\pi}{N}$ beträgt. Besonders bevorzugt beträgt dieser Drehwinkel $\dfrac{\pi}{N}$. Dadurch kann, insbesondere bei einem Magnetfeld, dessen Magnetfeldstärke in Abhängigkeit von einem Rotationswinkel um die Rotationsachse periodisch mit einer Periodenlänge $\tau$ verläuft, aufgrund der durch den Drehwinkel erzeugten Phasenverschiebung des von den beiden Sensorpaaren jeweils gemessenen Magnetfeldes die Berechnung des Drehwinkels besonders vereinfacht sein, wie weiter unten aus der Beispielrechnung ersichtlich wird.

Besonders bevorzugt entspricht der radiale Abstand der beiden Sensorelemente des ersten Sensorpaares voneinander dem radialen Abstand der beiden Sensorelemente des zweiten Sensorpaares voneinander. Dadurch kann die präzise Bestimmung des Winkels des Magneten relativ zum Sensor mit Bezug auf eine Drehung um die Rotationsachse besonders einfach über einen Vergleich der Werte erfolgen, die an den beiden Sensorpaaren jeweils analytisch aus den Sensorelementen der Sensorpaare ermittelt werden. Denn durch die identische Beabstandung der Sensorelemente kann eine unmittelbare Vergleichbarkeit der aus den Sensorelementen der Sensorpaare ermittelten Werte der Sensorpaare erreicht werden, ohne dass komplizierte analytische Nachberechnungen unter Berücksichtigung des Magnetfeldverlaufs des durch die Magneten bereitgestellten Magnetfelds erforderlich ist. Besonders bevorzugt weist das erste Sensorelement des ersten Sensorpaares denselben radialen Abstand von der Rotationsachse auf wie das erste Sensorelement des zweiten Sensorpaares. Besonders bevorzugt weist das zweite Sensorelement des ersten Sensorpaares denselben radialen Abstand von der Rotationsachse auf wie das zweite Sensorelement des zweiten Sensorpaares. Auch durch diese Maßnahmen, insbesondere durch eine Kombination der Maßnahmen, kann eine besonders gute Vergleichbarkeit der Werte ohne Erfordernis einer analytischen Nachbearbeitung der Werte ermöglicht sein, die für jedes Sensorpaar aus den Sensorelementen des Sensorpaares ermittelt werden.

In einer Ausführungsform ist der Magnet als mehrpoliger Magnet mit zumindest zwei, insbesondere zumindest vier Polen ausgebildet zum Bereitstellen eines Magnetfelds, dessen Magnetfeldstärke in Abhängigkeit von einem Rotationswinkel um die Rotationsachse periodisch mit einer Periodenlänge $\tau$ verläuft. Die Periodenlänge $\tau$ kann insbesondere über den gesamten Winkelbereich 0 bis $2\pi$ konstant sein und insbesondere $\dfrac{4\pi}{N}$ betragen, wobei $N$ die Anzahl der Pole des Magneten angibt. Der Magnet kann insbesondere als Ringmagnet ausgebildet sein. Beispielsweise kann der Magnet mehrere Pole an einer Stirnseite aufweisen, die ein Ende des Magneten entlang der Rotationsachse bildet. Beispielsweise kann der Magnet als Ringmagnet ausgebildet sein, wobei an einer Stirnseite jeweils ein Ringabschnitt als ein Pol ausgebildet ist, wobei insbesondere jeder Ringabschnitt über einen gleichgroßen Winkelabschnitt verläuft. Beispielsweise kann der Magnet als vierpoliger Ringmagnet ausgebildet sein, wobei jeder Pol über einen Winkelabschnitt von 90° verläuft. Beispielsweise kann der Magnet axial magnetisiert sein, so dass die Magnetisierungsvektoren innerhalb des Magneten im Wesentlichen vollständig entlang der Rotationsachse verlaufen. Beispielsweise kann der Magnet als mehrpoliger axial-lateral magnetisierter Magnet ausgebildet sein, so dass die Magnetisierung innerhalb des Magneten teilweise mit einer Komponente entlang der Rotationsachse und teilweise mit einer Komponente senkrecht zur Rotationsachse verläuft. Beispielsweise kann ein als mehrpoliger axial-lateral magnetisierter Magnet so ausgebildet sein, dass seine unterschiedlichen Pole jeweils durch einen Magnetabschnitt gebildet sind, wobei die Richtung des Magnetisierungsvektors innerhalb eines einen Pol bildenden Magnetabschnitts variiert. Dabei kann beispielsweise ein solcher axial-lateral magnetisierter Magnet als Ringmagnet ausgebildet sein, wobei jeder Magnetabschnitt als Winkelabschnitt ausgebildet ist, und wobei insbesondere innerhalb eines einen Pol bildenden Magnetabschnitts die Richtung des Magnetisierungsvektors entlang einer radialen Achse in dem gesamten Magnetabschnitt konstant ist. Beispielsweise kann ein axial-lateral magnetisierter Magnet so ausgebildet sein, dass die Magnetisierung innerhalb des Magneten bogenförmig verläuft, insbesondere kreisbogenförmig, insbesondere um eine Achse senkrecht zur Rotationsachse als Bogenmittelpunkt. Dabei kann beispielsweise der Magnetisierungsvektor an dem Übergang von zwei Polen, die zueinander benachbart angeordnet sind, senkrecht zur Rotationsachse verlaufen, wohingegen mit zunehmendem Abstand von dem Übergang abschnittsweise die Komponente des Magnetisierungsvektors in Richtung der Rotationsachse zunimmt. Insbesondere kann ein solcher axial-lateral magnetisierter Magnet als Ringmagnet ausgebildet sein, wobei jeder Pol durch einen Winkelabschnitt des Magneten um die Rotationsachse gebildet ist und die Pole aneinander angrenzen. Bei der beschriebenen Ausführungsform, bei der ein mehrpoliger Magnet eingesetzt wird, ist wesentlich, dass der Magnet so ausgebildet ist, dass er ein Magnetfeld bereitstellt, dessen Magnetfeldstärke in Abhängigkeit von einem Rotationswinkel um die Rotationsachse periodisch mit einer Periodenlänge $\tau$ verläuft. Hierzu sind mit dem Verlauf des Rotationswinkels alternierend angeordnete Pole vorgesehen. Die Periodenlänge $\tau$ nimmt mit zunehmender Anzahl der Pole ab. Besonders bevorzugt ist die Anzahl der Pole ein Vielfaches von 2. Die Periodizität kann sich dabei insbesondere auf eine bestimmte Komponente des Magnetfelds beziehen, beispielsweise auf die radiale Komponente des Magnetfelds. Durch das Vorsehen eines entsprechenden mehrpoligen Magneten, der ein entsprechend periodisch verlaufendes Magnetfeld bereitstellt, kann eine besonders reproduzierbare Messung des Winkels des Magneten relativ zum Sensor und damit eine besonders präzise Bestimmung der Winkelposition eines Rotors relativ zu einem Stator mittels einer erfindungsgemäßen Sensoranordnung gewährleistet sein.

Besonders bevorzugt beträgt der Drehwinkel, um den die Geraden der beiden Sensorpaare voneinander beabstandet sind, $\frac{\pi}{N}$, wobei N die Anzahl der Pole des Magneten angibt. Hierdurch kann eine Bestimmung des Winkels des Magneten relativ zum Sensor besonders vereinfacht sein, da, wie aus der weiter unten angegebenen Beispielrechnung noch ersichtlich werden wird, durch einen entsprechenden Drehwinkel eine Phasenverschiebung zwischen den Sensorpaaren mit Bezug auf den periodischen Verlauf der Magnetfeldstärke vorgesehen sein kann, über die eine einfache analytische Berechnung des genannten Winkels aus einem Vergleich, insbesondere aus Verhältnisbildung, der aus den Sensorpaaren gewonnenen Werte ermöglicht sein kann.

Besonders bevorzugt ist der Magnet so ausgebildet, dass sich eine Magnetfeldkomponente einer bestimmten Richtung, beispielsweise die Magnetfeldkomponente in einer Richtung senkrecht zur Rotationsachse, beispielsweise die Magnetfeldkomponente in radialer Richtung, eines von dem Magneten gebildeten Magnetfelds innerhalb eines Radiusabschnitts in Abhängigkeit von dem Radius monoton, insbesondere linear verändert, wobei die Sensorelemente des Sensors innerhalb des Radiusabschnitts angeordnet sind. Besonders bevorzugt kann hierzu der Magnet als axiallateral magnetisierter Ringmagnet ausgebildet sein. Besonders bevorzugt ist die Abhängigkeit, d. h. die Änderung der bestimmten Magnetfeldkomponente mit dem Radius, d. h. mit dem radialen Abstand zur Rotationsachse, über den gesamten Winkelbereich 0 bis $2\pi$ identisch, so dass auch der Radiusabschnitt für jeden Rotationswinkel um die Rotationsachse identisch ist. Durch die entsprechende Ausbildung des Magneten kann eine besonders gute Vergleichsmessung zwischen den Sensorpaaren und somit eine besonders einfache und präzise Bestimmung des Winkels des Magneten relativ zum Sensor ermöglicht sein. Bei dieser Ausführungsform kann es besonders vorteilhaft sein, dass die Sensorelemente zumindest eines Sensorpaares, insbesondere sämtlicher Sensorpaare, innerhalb des Radiusabschnitts angeordnet sind, in dem sich die bestimmte Magnetfeldkomponente monoton, insbesondere linear verändert. Zur Vermeidung von Fehlmessungen aufgrund von Lagetoleranzen zwischen Magnet und Sensor, wie z. B. von radialen Abstandstoleranzen, kann es bei diesem Ausführungsbeispiel besonders vorteilhaft sein, dass der radiale Abstand zwischen den Sensorelementen eines Sensorpaares geringer ist als 90 %, insbesondere geringer als 70 % der radialen Erstreckung des Radiusabschnitts. Wie an einer Beispielrechnung weiter unten näher erläutert kann dadurch die Bestimmung des Winkels des Magneten relativ zum Sensor besonders vereinfacht sein.

In einer Ausführungsform umfasst zumindest eines der Sensorpaare zumindest drei Sensorelemente, die jeweils entlang der dem Sensorpaar zugeordneten Gerade liegen. In einer Ausführungsform umfasst der Sensor zumindest drei Sensorpaare, denen jeweils eine Gerade zugeordnet ist, entlang der die Sensorelemente des jeweiligen Sensorpaares angeordnet sind, wobei sämtliche Geraden um einen Drehwinkel um die Rotationsachse voneinander beabstandet sind und sich in der Rotationsachse schneiden. Dabei kann insbesondere stets derselbe Drehwinkel zwischen zwei benachbarten Geraden vorgesehen sein, selbstverständlich mit Bezug auf eine bestimmte Drehrichtung um die Rotationsachse. Bei den beschriebenen Ausführungsformen kann durch das Vorsehen einer großen Anzahl an Sensorelementen eine besonders präzise Bestimmung des Winkels des Magneten relativ zum Sensor, und damit eine besonders präzise Bestimmung einer Winkelposition eines Rotors relativ zu einem Stator, mittels der erfindungsgemäßen Sensoranordnung ermöglicht sein, da die Vielzahl an verschiedenen Sensorelementen verschiedene Vergleichsmessungen ermöglicht, wodurch Fehler aufgrund einer Fehlfunktion oder Fehlanordnung vereinzelter Sensorelemente oder Fehler, die durch unerwünschte Variationen innerhalb des Magneten, wie beispielsweise Magnetisierungsvariationen, hervorgerufen werden, möglichst gut eliminiert werden können.

In einer Ausführungsform sind sämtliche Sensorelemente so ausgebildet, dass sie einen Messwert ausgeben, der proportional zu dem Magnetfeld ist, das an dem Ort vorherrscht, an dem sie angeordnet sind. Der Ort, an dem ein Sensor angeordnet ist, ist durch den Raummittelpunkt des Raums festgelegt, in dem der Sensor ein Magnetfeld misst. In einer Ausführungsform sind die Sensorelemente sämtlich so ausgebildet, dass sie eine Magnetfeldkomponente in genau einer Richtung messen und somit einen Messwert ausgeben, der proportional zu der Magnetfeldkomponente in dieser Richtung ist. Beispielsweise können sämtliche Sensorelemente als Hallsensorelemente ausgebildet sein, wobei sie als Messwert eine Hallspannung ausgeben. Dabei kann die ausgegebene Hallspannung möglicherweise als $U_{HALL}=k^*B_r$ vorgegeben sein, wobei $U_{HALL}$ die von einem Hallsensorelement als Messwert ausgegebene Hallspannung bezeichnet, $k$ einen Proportionalitätsfaktor und $B_r$ eine radiale Feldkomponente bezeichnet. Die Sensorelemente können insbesondere so ausgebildet sein, dass sie ausschließlich eine Magnetfeldkomponente mit einer Richtung senkrecht zur Rotationsachse, insbesondere ausschließlich eine Magnetfeldkomponente in radialer Richtung messen können. Die entsprechende Ausbildung der Sensorelemente als Hallsensorelemente kann besonders vorteilhaft sein, da Hallsensorelemente günstig herstellbar sind und sich zu einer präzisen Bestimmung eines anliegenden Magnetfelds eignen. Die Beschränkung der Messung auf eine Magnetfeldkomponente in einer vorgegebenen Richtung verringert darüber hinaus die Fehleranfälligkeit der Sensoranordnung.

Erfindungsgemäß weist die Sensoranordnung eine Recheneinheit zum Ermitteln der Winkelposition auf, wobei die Recheneinheit dazu ausgebildet ist, aus den Sensorelementen Messwerte zu ermitteln, die jeweils proportional zu einem bei dem jeweiligen Sensorelement vorhandenen Magnetfeld sind, insbesondere proportional zu einer bestimmten Magnetfeldkomponente des Magnetfelds, insbesondere proportional zu einer Magnetfeldkomponente des Magnetfelds senkrecht zur Rotationsachse, insbesondere proportional zu einer radialen Feldkomponente des Magnetfelds. Über die in der Sensoranordnung enthaltene Recheneinheit können direkt Messwerte aus den Sensorelementen bestimmt werden, wodurch über die Recheneinheit direkt Rückschlüsse auf die Winkelposition eines Rotors relativ zu einem Stator bei der bestimmungsgemäßen Verwendung der erfindungsgemäßen Sensoranordnung gewonnen werden können. Erfindungsgemäß ist die Recheneinheit dazu ausgebildet, durch Subtraktion eines aus dem ersten Sensorelement des ersten Sensorpaares ermittelten Messwerts von einem aus dem zweiten Sensorelement des ersten Sensorpaares ermittelten Messwert einen ersten Differenzwert zu bilden, und durch Subtraktion eines aus dem ersten Sensorelement des zweiten Sensorpaares ermittelten Messwerts von einem aus dem zweiten Sensorelement des zweiten Sensorpaares ermittelten Messwert einen zweiten Differenzwert zu bilden, und aus dem Verhältnis der Differenzwerte die Winkelposition des Rotors relativ zum Stator zu bestimmen. Hierdurch kann insbesondere ein Störeinfluss eines externen Störmagnetfelds eliminiert werden, das sonst Fehler bei dem Ermitteln des winkelabhängigen, von dem Magneten der Anordnung erzeugten Magnetfelds hervorrufen könnte. Die Subtraktion kann beispielsweise durch rechnerische Subtraktion der Messwerte erfolgen, die aus zwei gleich ausgerichteten Hallsensoren ermittelt wurden, oder durch mathematische Summierung der Messwerte, die aus zwei entgegengesetzt ausgerichteten Hallsensoren ermittelt wurden. In jedem Fall dient die Subtraktion dem Eliminieren eines Einflusses eines Störfelds. Die Bestimmung der Winkelposition aus dem Verhältnis der Differenzwerte kann beispielsweise in der Recheneinheit analytisch oder nummerisch erfolgen. Bei der beschriebenen Ausführungsform kann über die Differenzbildung der Messwerte der Sensorelemente eines jeden Sensorpaares der Einfluss eines externen Magnetfelds eliminiert werden, wohingegen durch die Verhältnisbildung zwischen den Messwerten, die für die Sensorpaare ermittelt wurden, beispielsweise eine unmittelbare Bestimmung des Winkels des Magneten relativ zum Sensor ermöglicht sein kann, indem das Verhältnis der Differenzwerte mit dem Verhältnis der in Abhängigkeit von dem Winkel ausgedrückten Funktionen gleichgesetzt wird, die die physikalisch erwarteten Differenzwerte mathematisch wiedergeben. Die physikalisch erwarteten Differenzwerte lassen sich aus dem bekannten Verhalten der Sensorelemente und dem Verlauf des Magnetfelds des Magneten physikalisch mathematisch ableiten. Dies wird weiter unten an einer Beispielrechnung näher erläutert.

Besonders bevorzugt ist die Recheneinheit dazu ausgebildet, die Winkelposition über einen Winkel $\alpha$ zu definieren und dabei den Winkel $\alpha$ anhand der Gleichung

$$\frac{U_1}{U_2} = \frac{f\left(\frac{2\pi}{\tau} * \alpha\right)}{f\left(\frac{2\pi}{\tau} * (\alpha + \beta)\right)}$$

zu bestimmen, wobei $U_1$ den ersten Differenzwert, $U_2$ den zweiten Differenzwert, $\tau$ die Periodenlänge, $f(\alpha)$ eine periodische Funktion in Abhängigkeit von $\alpha$ mit der Periodenlänge $\tau$ und $\beta$ den Drehwinkel zwischen den den beiden Sensorpaaren zugeordneten Geraden darstellt. Die Differenzwerte $U_1$ und $U_2$ können dabei den Messwerten der Sensorelemente der beiden Sensorpaare wie erläutert entnommen werden, wohingegen die funktionale Darstellung des Verhältnisses der Differenzwerte in Abhängigkeit von dem Winkel $\alpha$, der den Winkel des Magneten relativ zum Sensor charakterisiert, sowie in Abhängigkeit von dem Drehwinkel $\beta$ zwischen den Geraden der Sensorpaaren und der Periodenlänge $\tau$, die durch die geometrische Konstruktion der Sensoranordnung vorgegeben sind, die physikalisch-mathematisch erwartete Funktionalität der Differenzwerte unter Berücksichtigung des periodischen Verhaltens der Magnetfeldstärke in Abhängigkeit von dem Winkel $\alpha$ wiedergibt. Besonders bevorzugt ist der Magnet so ausgebildet und relativ zum Sensor angeordnet, dass er am Ort der Sensorelemente ein Magnetfeld mit einer oberwellenfreien Periodizität im Sinne einer Fourier-Reihenentwicklung bereitstellt. Dies vereinfacht die periodische Funktion $f(\alpha)$ dergestalt, dass die genannte Gleichung vereinfacht werden kann zu:

$$\frac{U_1}{U_2} = \frac{\sin\left(\frac{2\pi}{\tau} * \alpha\right)}{\sin\left(\frac{2\pi}{\tau} * (\alpha + \beta)\right)} .$$

Ein solches Magnetfeld kann insbesondere durch einen axial-lateral magnetisierten Magneten bereitgestellt werden. Hierdurch kann die Bestimmung von $\alpha$ besonders vereinfacht sein.

Die Erfindung betrifft ferner die Verwendung einer erfindungsgemäßen Sensoranordnung zum Bestimmen der Winkelposition des Rotors relativ zum Stator, wobei aus den Sensorelementen der Sensorpaare Messwerte ausgelesen werden. Durch Subtraktion eines aus dem ersten Sensorelement des ersten Sensorpaares ermittelten Messwerts von einem aus dem zweiten Sensorelement des ersten Sensorpaares ermittelten Messwert wird ein erster Differenzwert gebildet. Durch Subtraktion eines aus dem ersten Sensorelement des zweiten Sensorpaares ermittelten Messwerts von einem aus dem zweiten Sensorelement des zweiten Sensorpaares ermittelten Messwert wird ein zweiter Differenzwert gebildet. Durch die Subtraktion kann insbesondere ein Störeinfluss eines externen Störmagnetfelds eliminiert werden, das sonst Fehler bei dem Ermitteln des winkelabhängigen, von dem Magneten der Anordnung erzeugten Magnetfelds hervorrufen könnte. Sodann wird die Winkelposition aus dem Verhältnis der beiden Differenzwerte bestimmt. Die erfindungsgemäße Verwendung bringt die mit der erfindungsgemäßen Sensoranordnung oben beschriebenen Vorteile mit sich und kann wie oben erläutert ausgeführt werden.

Die Erfindung betrifft ferner ein Verfahren zum Bestimmen einer Winkelposition eines Rotors relativ zu einem Stator mittels einer Sensoranordnung, die zwei Bestandteile, nämlich einen Magneten und einen Sensor, umfasst. Eine der beiden Bestandteile ist an dem Rotor und der andere an dem Stator angeordnet. Der Sensor weist ein erstes und ein zweites Sensorpaar auf, wobei jedes Sensorpaar jeweils zwei Sensorelemente umfasst. Die Sensorpaare sind um einen Drehwinkel um eine Rotationsachse, um die der Rotor relativ zum Stator drehbar ist, voneinander beabstandet. Aus den Sensorelementen werden Messwerte ermittelt, die jeweils proportional zu einem bei dem jeweiligen Sensorelement vorhandenen Magnetfeld sind. Durch Subtraktion eines aus dem ersten Sensorelement des ersten Sensorpaares ermittelten Messwerts von einem aus dem zweiten Sensorelement des ersten Sensorpaares ermittelten Messwert wird ein erster Differenzwert gebildet. Durch Subtraktion eines aus dem ersten Sensorelement des zweiten Sensorpaares ermittelten Messwerts von einem aus dem zweiten Sensorelement des zweiten Sensorpaares ermittelten Messwert wird ein zweiter Differenzwert gebildet. Durch die Subtraktion kann insbesondere ein Störeinfluss eines externen Störmagnetfelds eliminiert werden, das sonst Fehler bei dem Ermitteln des winkelabhängigen, von dem Magneten der Anordnung erzeugten Magnetfelds hervorrufen könnte. Die Winkelposition wird aus dem Verhältnis der beiden Differenzwerte bestimmt, wobei hierzu die oben beschriebenen Ausführungen entsprechend anwendbar sind. Das erfindungsgemäße Verfahren kann Vorteile mit sich bringen und weitere Merkmale aufweisen, die oben im Zusammenhang mit der erfindungsgemäßen Sensoranordnung eingehend beschrieben sind.

Die Bestimmung der Winkelposition kann über die Bestimmung des Winkels $\alpha$, in dem der Magnet relativ zum Sensor angeordnet ist, erfindungsgemäß beispielsweise wie in dem nachfolgend beschriebenen Ausführungsbeispiel durchgeführt werden. Nachfolgend wird eine oberwellenfreie periodische Abhängigkeit des Magnetfelds von dem Winkel $\alpha$ angenommen. Selbstverständlich sind die nachfolgenden Berechnungen auch für jede andere periodische Funktion $f(\alpha)$ anwendbar. Hierzu ist jeweils die nachfolgend vereinfacht verwendete Funktion $\sin(\alpha)$ durch $f(\alpha)$ zu ersetzen. Bei dem beispielhaft beschriebenen Ausführungsbeispiel wird eine Sensoranordnung verwendet, die zwei Sensorpaare aufweist, von denen jedes zwei Sensorelemente aufweist, die jeweils als Hallsensorelemente ausgebildet sind. Die Hallsensorelemente sind dazu ausgebildet, eine Magnetfeldkomponente in einer bestimmten Richtung, insbesondere senkrecht zur Rotationsachse, insbesondere eine radiale Magnetfeldkomponente, zu messen, indem sie als Messwerte eine Hallspannung $U$ ausgeben, die proportional zu der bestimmten Magnetfeldkomponente des an ihnen anliegenden Magnetfelds $\vec{B}$ ist. Bei der beschriebenen Ausführungsform umfasst die erfindungsgemäße Sensoranordnung einen mehrpoligen Magneten, dessen Polanzahl $N$ beträgt und der ein Magnetfeld bereitstellt, dessen bestimmte Magnetfeldkomponente in Abhängigkeit von einem Rotationswinkel um die Rotationsachse periodisch mit einer Periodenlänge $\tau$ verläuft.

Bei dem beschriebenen Ausführungsbeispiel können die Hallspannungen, die von den Sensorelementen ausgegeben werden, wie folgt dargestellt werden, wobei als Beispiel für eine bestimmte Magnetfeldkomponente auf die radiale Magnetfeldkomponente $B_r$ abgestellt wird:

$$U_{1,1} = k * B_r\left(r_{1,1}\right) * \sin\left(\frac{2\pi}{\tau}\alpha\right) + k * B_{ext,1}$$

$$U_{1,2} = k * B_r\left(r_{1,2}\right) * \sin\left(\frac{2\pi}{\tau}\alpha\right) + k * B_{ext,1}$$

$$U_{2,1} = k * B_r\left(r_{2,1}\right) * \sin\left(\frac{2\pi}{\tau}(\alpha + \beta)\right) + k * B_{ext,2}$$

$$U_{2,2} = k * B_r\left(r_{2,2}\right) * \sin\left(\frac{2\pi}{\tau}(\alpha + \beta)\right) + k * B_{ext,2}$$

Dabei bedeuten:

$U_{1,1}$:      Hallspannung des ersten Sensorelements des ersten Sensorpaares

$U_{1,2}$ :      Hallspannung des zweiten Sensorelements des ersten Sensorpaares

$U_{2,1}$ :      Hallspannung des ersten Sensorelements des zweiten Sensorpaares

$U_{2,2}$ :      Hallspannung des zweiten Sensorelements des zweiten Sensorpaares

$B_r(r)$ :      die Amplitude der periodisch mit dem Winkel $\alpha$ verlaufenden radialen Magnetfeldkomponente, deren Wert von dem Radius $r$ abhängt

$r_{1,1}$ :      radialer Abstand des ersten Sensorelements des ersten Sensorpaares von der Rotationsachse

$r_{1,2}$ :      radialer Abstand des zweiten Sensorelements des ersten Sensorpaares von der Rotationsachse

$r_{2,1}$ :      radialer Abstand des ersten Sensorelements des zweiten Sensorpaares von der Rotationsachse

$r_{2,2}$ :      radialer Abstand des zweiten Sensorelements des zweiten Sensorpaares von der Rotationsachse

$\tau$ :      Periodenlänge

$\alpha$ :      Winkel des Magneten relativ zum Sensor

$\beta$ :      Drehwinkel zwischen den den Sensorpaaren zugeordneten Geraden

$B_{ext,1}$ :      an dem ersten Sensorpaar anliegendes externes Magnetfeld

$B_{ext,2}$ :      an dem zweiten Sensorpaar anliegendes externes Magnetfeld

$k$ :      Proportionalitätsfaktor

Dabei wird bei den beschriebenen Ausführungsbeispielen angenommen, dass wegen einer ausreichenden Nähe der Sensorelemente eines jeden Sensorpaares das externe Magnetfeld bei beiden Sensorelementen eines jeden Sensorpaares identisch ist. Somit können durch Subtraktion aus den Messwerten der Sensorelemente für jedes Sensorpaar die Differenzwerte $U_1$ und $U_2$ bestimmt werden:

$$U_1 = U_{1,1} - U_{1,2} = k * \left( B_r\left(r_{1,1}\right) - B_r\left(r_{1,2}\right) \right) * \sin\left( \frac{2\pi}{\tau} \alpha \right)$$

$$U_2 = U_{2,1} - U_{2,2} = k * \left( B_r\left(r_{2,1}\right) - B_r\left(r_{2,2}\right) \right) * \sin\left( \frac{2\pi}{\tau} (\alpha + \beta) \right)$$

Entsprechend kann aus Verhältnisbildung der Differenzwerte folgende Gleichung gebildet werden:

$$\frac{U_1}{U_2} = \frac{B_r\left(r_{1,1}\right) - B_r\left(r_{1,2}\right)}{B_r\left(r_{2,1}\right) - B_r\left(r_{2,2}\right)} * \frac{\sin\left( \frac{2\pi}{\tau} \alpha \right)}{\sin\left( \frac{2\pi}{\tau} (\alpha + \beta) \right)}$$

Dabei ist zu berücksichtigen, dass $B_r(r)$ die Amplitude der Magnetfeldkomponente bezeichnet, die unabhängig von dem Winkel $\alpha$ ist. Bei einer besonders bevorzugten Ausführungsform kann somit der Faktor $\frac{B_r\left(r_{1,1}\right) - B_r\left(r_{1,2}\right)}{B_r\left(r_{2,1}\right) - B_r\left(r_{2,2}\right)} = 1$ gesetzt werden. Dies kann beispielsweise bei einer Ausführungsform, bei der sämtliche Sensorelemente innerhalb eines Radiusabschnitts angeordnet sind, in dem die Komponente der Magnetfeldstärke linear zunimmt, der Fall sein, wenn der radiale Abstand zwischen den Sensorelementen bei beiden Sensorpaaren gleich ist. Auch kann dies präzise der Fall sein, wenn der radiale Abstand der ersten Sensorelemente beider Paare und der zweiten Sensorelemente beider Paare zur Rotationsachse jeweils identisch ist. Auch kann dies eine sinnvolle Näherung für leichte Abweichungen der beschriebenen Ausführungsformen sein. Entsprechend kann bei der besonders bevorzugten Ausführungsform der Win-

$$\frac{U_1}{U_2} = \frac{\sin\left(\frac{2\pi}{\tau}\alpha\right)}{\sin\left(\frac{2\pi}{\tau}(\alpha+\beta)\right)} \cdot$$

kel $\alpha$ bestimmt werden durch die Gleichung                    Beispielsweise kann die erfindungsgemäße Sensoranordnung eine Recheneinheit umfassen, die aus dem aus den Messwerten der Sensorelemente wie beschrieben gewonnenen Verhältnis $\frac{U_1}{U_2}$ aus der dargelegten Gleichung numerisch, beispielsweise über entsprechende Tabellen, den Winkel $\alpha$ bestimmen kann. Dabei ist zu berücksichtigen, dass der Winkel $\beta$ sowie die Periodenlänge $\tau$ aufgrund der

Geometrie der erfindungsgemäßen Sensoranordnung bekannt sind. Besonders bevorzugt kann der Winkel $\beta$ auf $\frac{\tau}{4}$

$$\frac{U_1}{U_2} = \frac{\sin\left(\frac{2\pi}{\tau}\alpha\right)}{\sin\left(\frac{2\pi}{\tau}\alpha+\frac{\pi}{2}\right)} = \tan\left(\frac{2\pi}{\tau}\alpha\right),$$

festgelegt sein, so dass das Verhältnis vereinfacht werden kann zu                    so dass durch einfache Arcustangensbildung der Winkel $\alpha$ auch analytisch aus dem gemessenen und ermittelten Verhältnis $\frac{U_1}{U_2}$ gewonnen werden kann.

Die Erfindung wird im Folgenden unter Bezugnahme auf drei Figuren näher erläutert. Es zeigen:

Figur 1:     in einer Prinzipdarstellung eine Ausführungsform einer erfindungsgemäßen Sensoranordnung;
Figur 2:     in einer schematischen Darstellung Magnetisierungsvarianten eines in einer erfindungsgemäßen Ausführungsform eingesetzten Magneten;
Figur 3:     in Prinzipdarstellungen weitere Ausführungsformen einer erfindungsgemäßen Sensoranordnung.

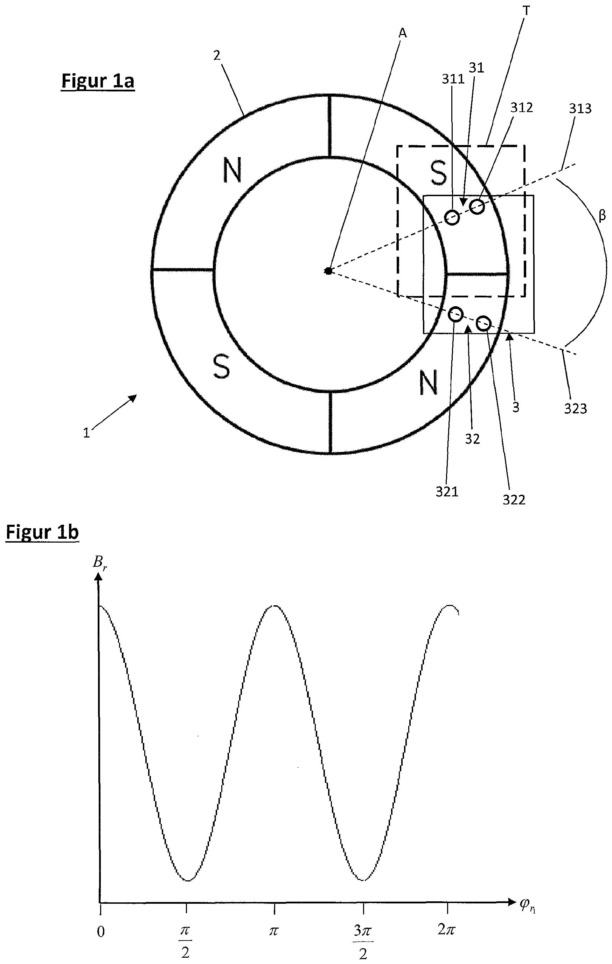

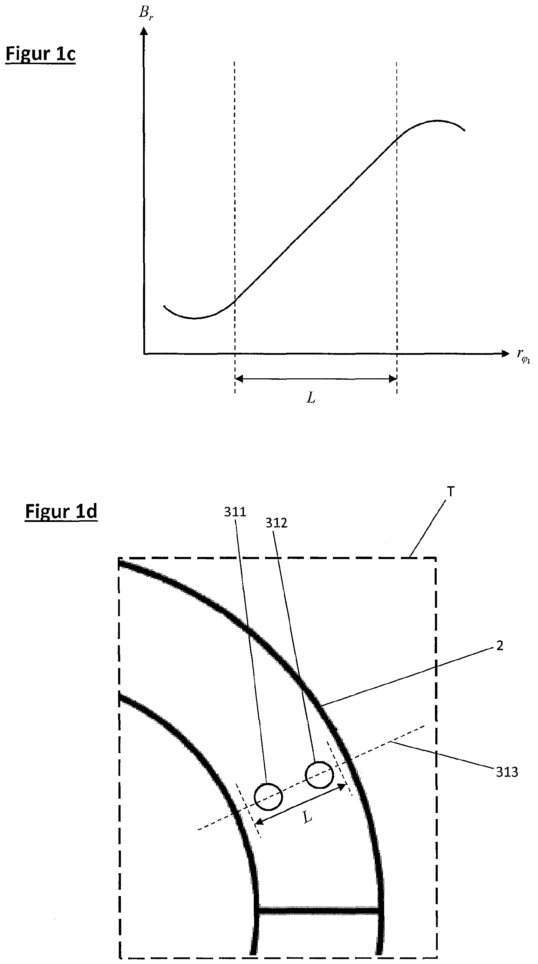

In Figur 1 umfassend die Figuren 1a bis 1d ist eine Ausführungsform einer erfindungsgemäßen Sensoranordnung in Prinzipdarstellungen sowie den schematischen Darstellungen des Magnetfeldverlaufs erläuternd dargestellt.
In Figur 1a ist die vorliegende Ausführungsform mit einem Blick entlang der Rotationsachse A, die vorliegend senkrecht zur Zeichenebene mittig durch den Magneten 2 verläuft, dargestellt. Die beschriebene Ausführungsform weist einen Magneten 2 sowie einen Sensor 3 auf. Der Magnet 2 ist als mehrpoliger, vorliegend vierpoliger Ringmagnet ausgebildet, der axial-lateral magnetisiert ist. An seiner seine Erstreckung in Richtung entlang der Rotationsachse A begrenzenden Stirnseite, die in Figur 1a dargestellt ist, weist der Magnet 2 somit vier Pole auf. Jeder Pol erstreckt sich über einen Winkelabschnitt von 90°. Die Pole sind alternierend angeordnet, so dass der Magnet 2 so ausgebildet ist, dass er ein Magnetfeld bereitstellt, dessen Magnetfeldstärke in Abhängigkeit von einem Rotationswinkel um die Rotationsachse A periodisch mit einer Periodenlänge $\tau$ verläuft. Aufgrund der Symmetrie des Magneten 2 mit seinen vier Polen beträgt die Periodenlänge $\tau$ den Winkel $\pi$. Die Periodizität bezieht sich dabei auf die radiale Magnetfeldkomponente des Magneten 2. Die Periodizität dieser radialen Magnetfeldkomponente $B_r$ ist in Figur 1b in Abhängigkeit von dem Rotationswinkel $\varphi$ dargestellt. Dabei ist in Figur 1b der Verlauf der Magnetfeldstärke in radialer Richtung $B_r$ in Abhängigkeit von dem Winkel $\varphi$ an dem Radius $r_1$ dargestellt. Dabei ist zu berücksichtigen, dass die Amplitude $B_r$ von dem Radius $r$ abhängt. Diese Abhängigkeit ist in Figur 1c dargestellt. In Figur 1c ist die radiale Magnetfeldkomponente $B_r$ in Abhängigkeit von dem Radius $r$ an einem bestimmten Winkel $\varphi_1$ dargestellt. Aus Figur 1c ist ersichtlich, dass die radiale Magnetfeldkomponente $B_r$ über einen Radiusabschnitt $L$ sich linear verändert. Der Radiusabschnitt $L$ ist auch in Figur 1d geometrisch eingezeichnet, in der ein Teilbereich T der Darstellung gemäß Figur 1a vergrößert dargestellt ist.
Der Sensor 3 der in Figur 1 dargestellten Ausführungsform weist zwei Sensorpaare 31, 32 auf. Jedem Sensorpaar ist eine Gerade 313, 323 zugeordnet, die die Rotationsachse A schneidet und senkrecht zur Rotationsachse A verläuft. Das erste Sensorpaar 31 weist ein erstes Sensorelement 311 und ein zweites Sensorelement 312 auf, die beide entlang der dem ersten Sensorpaar 31 zugeordneten Gerade 313 angeordnet sind. Das zweite Sensorpaar 32 weist ein erstes Sensorelement 321 und ein zweites Sensorelement 322 auf, die beide entlang der Geraden 323 angeordnet sind, die dem zweiten Sensorpaar 32 zugeordnet ist. Die beiden den Sensorpaaren 31, 32 zugeordneten Geraden 313, 323 sind um einen Drehwinkel $\beta$ voneinander beabstandet. Wie insbesondere aus Figur 1d ersichtlich, sind sämtliche Sensorelemente 311, 312, 321, 322 innerhalb des Radiusabschnitts des Magneten 2 angeordnet, in dem sich die radiale Magnetfeldkomponente $B_r$, wie in Figur 1c dargestellt, linear verändert. Der radiale Abstand der Sensorelemente eines jeden Sensorpaares beträgt dabei weniger als 70 % der radialen Erstreckung des Radiusabschnitts L. Bei der beschriebenen Ausführungsform ist der radiale Abstand zur Rotationsachse A des ersten Sensorelements 311 des ersten Sensorpaares 31 identisch zu dem radialen Abstand zur Rotationsachse A des ersten Sensorelements 321 des zweiten Sensorpaares 32, und der radiale Abstand zur Rotationsachse A des zweiten Sensorelements 312 des ersten Sensorpaares 31 ist identisch zu dem radialen Abstand zur Rotationsachse A des zweiten Sensorelements 322 des zweiten Sensorpaares 32. Entsprechend ist bei der dargestellten Ausführungsform die oben erläuterte beispielhafte Ermittlung des Winkels $\alpha$ des Magneten 2 relativ zum Sensor 3 möglich. Dabei beträgt aufgrund der geometrischen Anordnung

$$\frac{B_r\!\left(r_{1,1}\right) - B_r\!\left(r_{1,2}\right)}{B_r\!\left(r_{2,1}\right) - B_r\!\left(r_{2,2}\right)} = 1$$

der in Figur 1a dargestellten Sensoranordnung 1 der Faktor identisch 1, da wegen der identischen radialen Abstände der ersten Sensorelemente 311, 321 und der zweiten Sensorelemente 312, 322 gilt: $B_r(r_{1,1}) - B_r(r_{1,2}) = B_r(r_{2,1}) - B_r(r_{2,2})$ Dadurch ist die Ermittlung des Winkels $\alpha$ besonders vereinfacht.

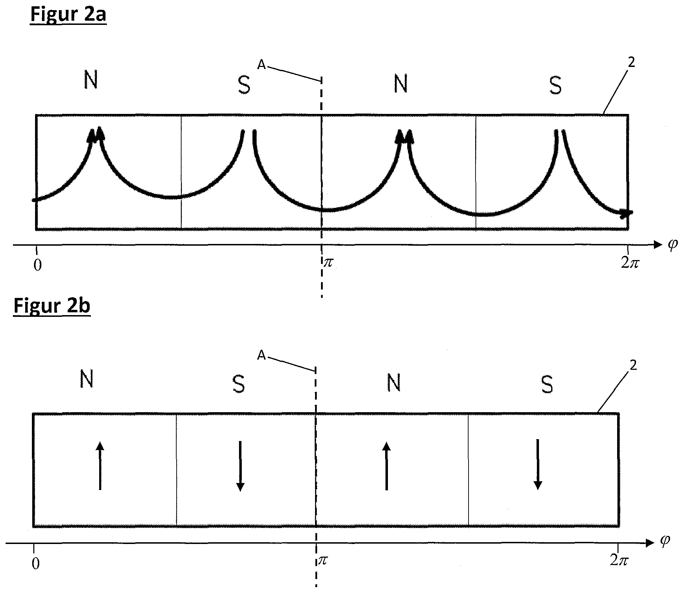

In Figur 2 sind verschiedene Magnetisierungsvarianten eines Magneten 2 dargestellt, der in einer erfindungsgemäßen Sensoranordnung 1 gemäß Figur 1 zum Einsatz kommen kann. In den Figuren 2a und 2b der Figur 2 ist jeweils ein Magnet 2 gemäß Figur 1a "abgewickelt" dargestellt, wobei erläuterungshalber die Rotationsachse A wie in Figur 1a eingezeichnet auch in den Figuren 2a und 2b dargestellt ist. In Figur 2a ist ein axial-lateral magnetisierter Magnet 2 dargestellt. Dieser Magnet 2 weist vier Magnetabschnitte auf, die jeweils einen Pol bilden und als Winkelabschnitt des Ringmagneten ausgebildet sind. Innerhalb eines jeden Magnetabschnitts variiert die Richtung des Magnetisierungsvektors, wobei die Magnetisierung des Magneten 2 einen bogenförmigen Verlauf aufweist. Dabei bezieht sich der bogenförmige Verlauf darauf, dass die Magnetisierung innerhalb des Magneten 2 von einem als Winkelabschnitt ausgebildeten Magnetabschnitt mit eine: bestimmten Polarität zu seinen benachbarten als Winkelabschnitt ausgebildeten Magnetabschnitt mit einer entgegengesetzten Polarität bogenförmig verläuft, wobei die Magnetisierung an dem Übergang zwischen den Magnetabschnitten eine Richtung senkrecht zur Rotationsachse A aufweist. Der in Figur 2a dargestellte axial-lateral magnetisierte Magnet 2 ist besonders gut dafür geeignet, ein Magnetfeld bereitzustellen, das eine oberwellenfreie Periodizität in Abhängigkeit von dem Rotationswinkel aufweist, so dass die oben erläuterte Beispielrechnung mit Bezug auf die Berechnungsmöglichkeit bei einer oberwellenfreien Periodizität anwendbar ist. Darüber hinaus kann mit einem Magneten 2 wie in Figur 2a dargestellt ein Magnetfeld bereitgestellt werden, bei dem eine Magnetfeldkomponente, insbesondere die radiale Magnetfeldkomponente, sich in einem ausreichend großen Radiusabschnitt monoton, insbesondere linear verändert, was die weiter vereinfachte Berechnung des Winkels $\alpha$ wie zu Figur 1a erläutert ermöglichen kann. In Figur 2b ist hingegen ein rein axial magnetisierter Magnet 2 dargestellt. Dieser Magnet 2 kann ebenso als Magnet 2 der in Figur 1a dargestellten Sensoranordnung 1 eingesetzt werden und weist eine entsprechende alternierende Anordnung seiner vier Pole auf. Allerdings verläuft die Magnetisierung innerhalb des Magneten 2 gemäß Figur 2b ausschließlich in einer Richtung entlang der Rotationsachse A, so dass kein bogenförmiger Verlauf der Magnetisierung wie bei dem axial-lateral magnetisierten Magneten 2 gemäß Figur 2a innerhalb des Magneten 2 vorhanden ist. Damit wird ein oberwellenfreier Feldverlauf nicht bei allen Sensorabständen von der Stirnfläche sondern erst bei vergrößerten Sensorabständen erzeugt.

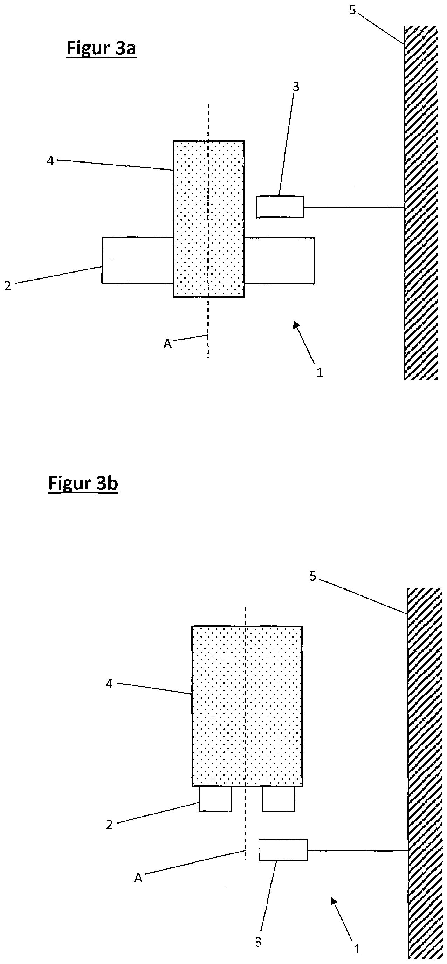

In Figur 3 umfassend die Figuren 3a und 3b sind in erläuternden Prinzipdarstellungen zwei weitere Ausführungsbeispiele einer erfindungsgemäßen Sensoranordnung 1 dargestellt. Diese Ausführungsbeispiele umfassen jeweils einen Rotor 4 sowie einen Stator 5. Bei beiden Ausführungsbeispielen ist der Magnet 2 an dem Rotor 4 verdrehsicher befestigt und der Sensor 3 an dem Stator 5 verdrehsicher befestigt. Der Magnet 2 und der Sensor 3 der Ausführungsform gemäß den Figuren 3a und 3b können analog zu dem Ausführungsbeispiel gemäß Figur 1a ausgebildet und zueinander angeordnet sein. Aus Figur 3 mit den dort dargestellten Ausführungsbeispielen entnimmt der Fachmann leicht die vielseitige Anwendbarkeit der erfindungsgemäßen Sensoranordnung 1. Bei dem Ausführungsbeispiel gemäß Figur 3a ist der Magnet 2 an der radialen Außenseite des Rotors 4 angeordnet, wobei der Sensor 3 entlang der Rotationsachse A oberhalb des Magneten 2 und radial außerhalb des Rotors 4 und an dem Stator 5 befestigt angeordnet ist. Bei der Ausführungsform gemäß Figur 3b sind der Magnet 2 und der Sensor 3 an der Stirnseite und somit radial innerhalb des Rotors 4 angeordnet. Hierzu ist der Magnet 2 an der Stirnseite des Rotors 4 befestigt, wohingegen der Sensor 3 entlang der Rotationsachse A unterhalb des Magneten 2 und radial innerhalb des Rotors 4 angeordnet und an dem Stator 5 befestigt ist. In weiteren Ausführungsbeispielen kann der Sensor 3 auch radial versetzt zu dem Magneten 2 angeordnet sein. Die relative Anordnung von Sensor 3 und Magnet 2 zueinander kann je nach Ausführungsform, insbesondere je nach dem Verlauf des Magnetfelds des Magneten 2 der Ausführungsform, gezielt vorgenommen werden. Wie für den Fachmann ersichtlich, ergibt sich die vielseitige Anwendbarkeit der erfindungsgemäßen Sensoranordnung 1 insbesondere dadurch, dass es genügt, den Sensor 3 nur entlang eines kleinen radialen Abschnitts des Magneten 2 anzuordnen. Dabei gewährleistet die erfindungsgemäße Sensoranordnung 1 gleichzeitig auf einfache Art und Weise eine zuverlässige Eliminierung des Einflusses eines externen Magnetfelds und eine präzise Bestimmung einer Winkelposition eines Rotors 4 relativ zu einem Stator 5 mit Bezug auf eine Drehung um eine Rotationsachse A.

## Bezugzeichenliste

| | |
|---|---|
| 1 | Sensoranordnung |
| 2 | Magnet |
| 3 | Sensor |
| 4 | Rotor |
| 5 | Stator |
| 31 | erstes Sensorpaar |
| 32 | zweites Sensorpaar |
| 311 | erstes Sensorelement |
| 312 | zweites Sensorelement |
| 313 | erstem Sensorpaar zugeordnete Gerade |
| 321 | erstes Sensorelement |
| 322 | zweites Sensorelement |
| 323 | zweitem Sensorpaar zugeordnete Gerade |
| A | Rotationsachse |
| L | Radiusabschnitt |
| T | Teilbereich |
| $\beta$ | Drehwinkel |

## Patentansprüche

1. Sensoranordnung (1) zum Bestimmen einer Winkelposition eines Rotors (4) relativ zu einem Stator (5), die Sensoranordnung (1) umfassend zwei Bestandteile, nämlich einen Magneten (2) und einen Sensor (3), wobei die Bestandteile (2, 3) um eine Rotationsachse (A) zueinander drehbar angeordnet sind, wobei der Sensor (3) ein erstes und ein zweites Sensorpaar (31, 32) umfasst, die jeweils ein erstes und ein zweites Sensorelement (311, 312, 321, 322) aufweisen, wobei jedes der Sensorelemente (311, 312, 321, 322) zum Ermitteln einer Magnetfeldkomponente in genau einer vorgegebenen Richtung ausgebildet ist und somit jedes der Sensorelemente (311, 312, 321, 322) einen Messwert ausgibt, der proportional zu der Magnetfeldkomponente in dieser Richtung ist, wobei die Sensoranordnung (1) eine Recheneinheit zum Ermitteln der Winkelposition aufweist, die dazu ausgebildet ist, aus den Sensorelementen (311, 312, 321, 322) die Messwerte zu ermitteln, die jeweils proportional zu der Magnetfeldkomponente in der vorbestimmten Richtung des bei dem jeweiligen Sensorelement (311, 312, 321, 322) vorhandenen Magnetfelds sind,
wobei jedem Sensorpaar (31, 32) eine Gerade (313, 323) zugeordnet ist, entlang der die zwei Sensorelemente (311, 312, 321, 322) liegen und die die Rotationsachse (A) schneidet, wobei das erste Sensorelement (311, 321) einen geringeren radialen Abstand von der Rotationsachse (A) aufweist als das zweite Sensorelement (312, 323) und wobei beide Sensorelemente (311, 312, 321, 322) an derselben radialen Seite der Rotationsachse (A) liegen, wobei die dem ersten Sensorpaar (31) zugeordnete Gerade (313) von der dem zweiten Sensorpaar (32) zugeordneten Gerade (323) um einen Drehwinkel ($\beta$) um die Rotationsachse (A) beabstandet ist, wobei die Recheneinheit dazu ausgebildet ist, zum Eliminieren eines Störeinflusses eines externen Störmagnetfelds durch Subtraktion eines aus dem ersten Sensorelement (311) des ersten Sensorpaares (31) ermittelten Messwerts von einem aus dem zweiten Sensorelement (312) des ersten Sensorpaares (31) ermittelten Messwert einen ersten Differenzwert zu bilden, und durch Subtraktion eines aus dem ersten Sensorelement (321) des zweiten Sensorpaares (32) ermittelten Messwerts von einem aus dem zweiten Sensorelement (322) des zweiten Sensorpaares (32) ermittelten Messwert einen zweiten Differenzwert zu bilden, und aus dem Verhältnis der Differenzwerte die Winkelposition des Rotors (4) relativ zum Stator (5) zu bestimmen.

2. Sensoranordnung (1) nach Anspruch 1,
wobei der radiale Abstand der beiden Sensorelemente (311, 312) des ersten Sensorpaars (31) voneinander dem radialen Abstand der beiden Sensorelemente (321, 322) des zweiten Sensorpaars (32) entspricht.

3. Sensoranordnung (1) nach einem der vorangehenden Ansprüche,
wobei das erste Sensorelement (311) des ersten Sensorpaars (31) denselben radialen Abstand von der Rotationsachse (A) aufweist wie das erste Sensorelement (321) des zweiten Sensorpaares (32), und/oder dass das zweite Sensorelement (312) des ersten Sensorpaars (31) denselben radialen Abstand von der Rotationsachse (A) aufweist wie das zweite Sensorelement (322) des zweiten Sensorpaares (32).

4. Sensoranordnung (1) nach einem der vorangehenden Ansprüche,
wobei der Magnet (2) als mehrpoliger Magnet (2) mit zumindest zwei, insbesondere zumindest vier Polen ausgebildet ist zum Bereitstellen eines Magnetfelds, dessen Magnetfeldstärke in Abhängigkeit von einem Rotationswinkel um die Rotationsachse (A) periodisch mit einer Periodenlänge $\tau$ verläuft.

5. Sensoranordnung (1) nach Anspruch 4,
wobei der Drehwinkel ($\beta$), um den die Geraden (313, 323) der beiden Sensorpaare (31, 32) voneinander beabstandet sind, $\dfrac{\pi}{N}$ beträgt, wobei $N$ die Anzahl der Pole des Magneten (2) angibt.

6. Sensoranordnung (1) nach einem der vorangehenden Ansprüche,
wobei der Magnet (2) so ausgebildet ist, dass sich eine Magnetfeldkomponente einer bestimmten Richtung eines von dem Magneten (2) gebildeten Magnetfelds innerhalb eines Radiusabschnitts monoton, insbesondere linear verändert, wobei die Sensorelemente (311, 312, 321, 322) des Sensors (3) innerhalb des Radiusabschnitts angeordnet sind.

7. Sensoranordnung (1) nach einem der vorangehenden Ansprüche,
wobei zumindest eines der Sensorpaare (31, 32) zumindest drei Sensorelemente (311, 312, 321, 322) umfasst, die jeweils entlang der dem Sensorpaar (31, 32) zugeordneten Gerade (313, 323) liegen, und/oder dass der Sensor (3) zumindest drei Sensorpaare (31, 32) umfasst, denen jeweils eine Gerade (313, 323) zugeordnet ist, entlang der die Sensorelemente (311, 312, 321, 322)des jeweiligen Sensorpaars (31, 32) angeordnet sind, wobei sämtliche Geraden (313, 323) um einen Drehwinkel um die Rotationsachse (A) voneinander beabstandet sind und sich in der Rotationsachse (A) schneiden.

8. Sensoranordnung (1) nach einem der vorangehenden Ansprüche,
wobei sämtliche Sensorelemente (311, 312, 321, 322) als Hallsensorelemente ausgebildet sind, wobei sie als Messwert eine Hallspannung ausgeben.

9. Sensoranordnung (1) nach einem der vorangehenden Ansprüche,
wobei die Recheneinheit dazu ausgebildet ist, aus den Sensorelementen (311, 312, 321, 322) Messwerte zu ermitteln, die jeweils proportional zu einer Feldkomponente des Magnetfelds senkrecht zur Rotationsachse (A) sind, insbesondere proportional zu einer radialen Feldkomponente des Magnetfelds sind.

10. Sensoranordnung (1) nach einem der vorangehenden Ansprüche,
wobei die Recheneinheit dazu ausgebildet ist, die Winkelposition über einen Winkel $\alpha$ zu definieren und dabei den

$$\frac{U_1}{U_2} = \frac{f\left(\frac{2\pi}{\tau} * \alpha\right)}{f\left(\frac{2\pi}{\tau} * (\alpha + \beta)\right)}$$

Winkel $\alpha$ anhand der Gleichung zu bestimmen, wobei $U_1$ den ersten Differenzwert, $U_2$ den zweiten Differenzwert, $\tau$ die Periodenlänge, $f(\alpha)$ eine periodische Funktion in Abhängigkeit von $\alpha$ mit der Periodenlänge $\tau$ und $\beta$ den Drehwinkel zwischen den den beiden Sensorpaaren (31, 32) zugeordneten Geraden (313, 323) darstellt.

11. Sensoranordnung (1) nach einem der vorangehenden Ansprüche,
wobei die Sensoranordnung (1) den Stator (5) und den Rotor (4) umfasst, wobei einer der beiden Bestandteile (2, 3) an dem Rotor (4) und der andere an dem Stator (5) angeordnet ist

12. Verwendung einer Sensoranordnung (1) nach einem der vorangehenden Ansprüche zum Bestimmen der Winkelposition des Rotors (4) relativ zum Stator (5), wobei aus den Sensorelementen (311, 312, 321, 322) der Sensorpaare (31, 32) Messwerte ausgelesen werden, wobei zum Eliminieren eines Störeinflusses eines externen Störmagnetfelds durch Subtraktion eines aus dem ersten Sensorelement (311) des ersten Sensorpaares (31) ermittelten Messwerts von einem aus dem zweiten Sensorelement (312) des ersten Sensorpaares (31) ermittelten Messwert ein erster Differenzwert gebildet wird, und durch Subtraktion eines aus dem ersten Sensorelement (321) des zweiten Sensorpaares (32) ermittelten Messwerts von einem aus dem zweiten Sensorelement (322) des zweiten Sensorpaares (32) ermittelten Messwert ein zweiter Differenzwert gebildet wird, wobei die Winkelposition aus dem Verhältnis der beiden Differenzwerte bestimmt wird.

13. Verfahren zum Bestimmen einer Winkelposition eines Rotors (4) relativ zu einem Stator (5) mittels einer Sensoranordnung (1) umfassend zwei Bestandteile, nämlich einen Magneten (2) und einen Sensor (3), wobei einer der beiden Bestandteile (2, 3) an dem Rotor (4) und der andere an dem Stator (5) angeordnet ist, wobei der Sensor (3) ein erstes und ein zweites Sensorpaar (31, 32) aufweist, die jeweils zwei Sensorelemente (311, 312, 321, 322) umfassen, wobei die Sensorpaare (31, 32) um einen Drehwinkel ($\beta$) um eine Rotationsachse (A), um die der Rotor (4) relativ zum Stator (5) drehbar ist, voneinander beabstandet sind, wobei aus den Sensorelementen (311, 312, 321, 322) Messwerte ermittelt werden, die jeweils proportional zu einem bei dem jeweiligen Sensorelement (311, 312, 321, 322) vorhandenen Magnetfeld sind, wobei jedes der Sensorelemente (311, 312, 321, 322) zum Ermitteln einer Magnetfeldkomponente in genau einer vorgegebenen Richtung ausgebildet ist und somit jedes der Sensorelemente (311, 312, 321, 322) einen Messwert ausgibt, der proportional zu der Magnetfeldkomponente in dieser Richtung ist,
wobei zum Eliminieren eines Störeinflusses eines externen Störmagnetfelds durch Subtraktion eines aus dem ersten Sensorelement (311) des ersten Sensorpaares (31) ermittelten Messwerts von einem aus dem zweiten Sensorelement (312) des ersten Sensorpaares (31) ermittelten Messwert ein erster Differenzwert gebildet wird und durch Subtraktion eines aus dem ersten Sensorelement (321) des zweiten Sensorpaares (32) ermittelten Messwerts von einem aus dem zweiten Sensorelement (322) des zweiten Sensorpaares (32) ermittelten Messwert ein zweiter Differenzwert gebildet wird, wobei die Winkelposition aus dem Verhältnis der beiden Differenzwerte bestimmt wird.

**Claims**

1. Sensor arrangement (1) for determining an angular position of a rotor (4) relative to a stator (5), the sensor arrangement (1) comprising two components, namely a magnet (2) and a sensor (3), wherein the components (2, 3) are arranged to be rotatable to each other about an axis of rotation (A), wherein the sensor (3) comprises a first and a second sensor pair (31, 32), each having a first and a second sensor element (311, 312, 321, 322), wherein each of the sensor elements (311, 312, 321, 322) is configured to determine a magnetic field component in precisely one pre-defined direction and each of the sensor elements (311, 312, 321, 322) accordingly outputs a measured value which is proportional to the magnetic field component in this direction, wherein the sensor arrangement (1) comprises an arithmetic unit for determining the angular position and configured to obtain those measured values from the sensor elements (311, 312, 321, 322) which are each proportional to the magnetic field component in the pre-defined direction of the magnetic field present at the respective sensor element (311, 312, 321, 322), wherein each sensor pair (31, 32) has assigned to it a straight line (313, 323) along which the two sensor elements (311, 312, 321, 322) are located and which intersects the axis of rotation (A), wherein the first sensor element (311, 321) has a smaller radial distance from the axis of rotation (A) than the second sensor element (312, 323) and both sensor elements (311, 312, 321, 322) are located on the same radial side of the axis of rotation (A), wherein the straight line (313) assigned to the first sensor pair (31) is spaced from the straight line (323) assigned to the second sensor pair (32) by an angle of rotation ($\beta$), wherein the arithmetic unit is configured to form a first differential value by subtracting a measured value obtained from the first sensor element (311) of the first sensor pair (31) from a measured value obtained from the second sensor element (312) of the first sensor pair (31) and to form a second differential value by subtracting a measured value obtained from the first sensor element (321) of the second sensor pair (32) from a measured value obtained from the second sensor element (322) of the second sensor pair to eliminate an interference from an external magnetic field, and to determine the angular position of the rotor (4) relative to the stator (5) based on the ratio of the differential values.

2. Sensor arrangement (1) according to claim 1, wherein the radial distance of the two sensor elements (311, 312) of the first sensor pair (31) from each other corresponds to the radial distance of the two sensor elements (321, 322) of the second sensor pair (32).

3. Sensor arrangement (1) according to one of the preceding claims, wherein the first sensor element (311) of the first sensor pair (31) has the same radial distance from the axis of rotation (A) as the first sensor element (321) of the second sensor pair (32) and/or that the second sensor element (312) of the first sensor pair (31) has the same radial distance from the axis of rotation (A) as the second sensor element (322) of the second sensor pair (32).

4. Sensor arrangement (1) according to one of the preceding claims, wherein the magnet (2) is designed as a multipole magnet (2) having at least two, in particular at least four magnetic poles for providing a magnetic field whose magnetic field strength is periodical with a period length $\tau$ in dependence of an angle of rotation about the axis of rotation (A).

5. Sensor arrangement (1) according to claim 4, wherein the angle of rotation ($\beta$) by which the straight lines (313, 323) of the two sensor pairs (31, 32) are spaced from each other is $\dfrac{\pi}{N}$, where $N$ is the number of poles of the magnet (2).

6. Sensor arrangement (1) according to one of the preceding claims, wherein the magnet (2) is configured in such a way that a magnetic field component of a particular direction of a magnetic field generated by the magnet (2) changes monotonically, in particular linearly within a radius section, wherein the sensor elements (311, 312, 321, 322) of the sensor (3) are arranged within the radius section.

7. Sensor arrangement (1) according to one of the preceding claims, wherein at least one of the sensor pairs (31, 32) comprises at least three sensor elements (311, 312, 321, 322) which are each located along the straight line (313, 323) assigned to the sensor pair (31, 32) and/or the sensor (3) comprises at least three sensor pairs (31, 32) each having assigned to it a straight line (313, 323) along which the sensor elements (311, 312, 321, 322) of the respective sensor pair (31, 32) are arranged, wherein all straight lines (313, 323) are spaced from each other by an angle of rotation about the axis of rotation (A) and intersect in the axis of rotation (A).

8. Sensor arrangement (1) according to one of the preceding claims, wherein all sensor elements (311, 312, 321, 322) are designed as Hall sensors and output a Hall voltage as measured value.

9. Sensor arrangement (1) according to one of the preceding claims, wherein the arithmetic unit is configured to obtain measured values form the sensor elements (311, 312, 321, 322) which are each proportional to a field component of the magnetic field perpendicular to the axis of rotation (A), in particular proportional to a radial field component of the magnetic field.

10. Sensor arrangement (1) according to one of the preceding claims, wherein the arithmetic unit is configured to define the angular position based on an angle $\alpha$ and to determine the angle $\alpha$ using the equation

$$\frac{U_1}{U_2} = \frac{f\left(\frac{2\pi}{\tau} * \alpha\right)}{f\left(\frac{2\pi}{\tau} * (\alpha + \beta)\right)},$$

where $U_1$ represents the first differential value, $U_2$ represents the second differential value, $\tau$ represents the period length, $f(\alpha)$ represents a period function in dependence of $\alpha$ with the period length $\tau$, and $\beta$ represents the angle of rotation between the straights (313, 323) assigned to the two sensor pairs (31, 32).

11. Sensor arrangement (1) according to any one of the preceding claims, wherein the sensor arrangement (1) comprises the stator (5) and the rotor (4), one of these two components (2, 3) being arranged on the rotor (4) and the other one on the stator (5).

12. Use of a sensor arrangement (1) according to one of the preceding claims for the determination of the angular position of the rotor (4) relative to the stator (5), wherein measured values are read out from the sensor elements (311, 312, 321, 322) of the sensor pairs (31, 32), wherein a first differential value is formed by subtracting a measured value obtained from the first sensor element (311) of the first sensor pair (31) from a measured value obtained from the second sensor element (312) of the first sensor pair (31) and a second differential value is formed by subtracting a measured value obtained from the first sensor element (321) of the second sensor pair (32) from a measured value obtained from the second sensor element (322) of the second sensor pair (32) to eliminate an interference from an external magnetic field, the angular position of the rotor (4) relative to the stator (5) being determined based on the ratio of the two differential values.

13. Method for determining an angular position of a rotor (4) relative to a stator (5) using a sensor arrangement (1) comprising two components, namely a magnet (2) and a sensor (3), wherein one of the two components (2, 3) is arranged on the rotor (4) and the other one on the stator (5), wherein the sensor (3) comprises a first and a second sensor pair (31, 32), each comprising two sensor elements (311, 312, 321, 322), wherein the sensor pairs (31, 32) are spaced from each other by an angle of rotation ($\beta$) about an axis of rotation (A) about which the rotor (4) is rotatable relative to the stator (5), wherein measured values which are each proportional to a magnetic field present at a respective sensor element (311, 312, 321, 322) are obtained from the sensor elements (311, 312, 321, 322), wherein each sensor element (311, 312, 321, 322) is configured to determine a magnetic field component in precisely one pre-defined direction and thus each of the sensor elements (311, 312, 321, 322) outputs a measured value which is proportional to the magnetic field component in this direction, wherein a first differential value is formed by subtracting a measured value obtained from the first sensor element (311) of the first sensor pair (31) from a measured value obtained from the second sensor element (312) of the first sensor pair (31) and a second differential value is formed by subtracting a measured value obtained from the first sensor element (321) of the second sensor pair (32) from a measured value obtained from the second sensor element (322) of the second sensor pair (32) to eliminate an interference from an external magnetic field, and to determine the angular position of the rotor (4) relative to the stator (5) based on the ratio of the differential values.

**Revendications**

1. Agencement de capteurs (1) pour déterminer une position angulaire d'un rotor (4) par rapport à un stator (5), l'agencement de capteurs (1) comprenant deux composants, à savoir un aimant (2) et un capteur (3), dans lequel les composants (2, 3) sont disposés de manière à pouvoir tourner l'un par rapport à l'autre autour d'un axe de rotation (A), dans lequel le capteur (3) comprend une première et une deuxième paire de capteurs (31, 32), chacune ayant un premier et un deuxième élément de capteur (311, 312, 321, 322), dans lequel chacun des éléments de capteur (311, 312, 321, 322) est configuré pour déterminer une composante de champ magnétique dans exactement une direction prédéfinie et chacun des éléments de capteur (311, 312, 321, 322) délivre en conséquence une valeur de mesure qui est proportionnelle à la composante de champ magnétique dans cette direction, l'agencement de capteurs (1) comprenant une unité arithmétique pour déterminer la position angulaire et étant configuré pour obtenir les valeurs de mesure des éléments de capteurs (311, 312), 321, 322) qui sont chacun proportionnels à la composante de champ magnétique dans la direction prédéfinie du champ magnétique présent au niveau de l'élément de capteur respectif (311, 312, 321, 322), dans lequel à chaque paire de capteurs (31, 32) est affectée une droite (313, 323) le long de laquelle les deux éléments de capteur (311, 312, 321, 322) sont situés et qui coupe l'axe de rotation (A), dans lequel le premier élément de capteur (311, 321) a une distance radiale plus petite de l'axe de rotation (A) que le second élément de capteur (312, 323) et les deux éléments de capteur (311, 312, 321, 322) sont situés sur le même côté radial de l'axe de rotation (A), dans lequel la droite (313) affectée à la première paire de capteurs (31) est espacée de la droite (323) affectée à la deuxième paire de capteurs (32) d'un angle de rotation ($\beta$), dans lequel l'unité arithmétique est configurée pour former une première valeur différentielle en soustrayant une valeur mesurée obtenue du premier élément de capteur (311) de la première paire de capteurs (31) d'une valeur mesurée obtenue du second élément de capteur (312) de la première paire de capteurs (31) et pour former une deuxième valeur différentielle en soustrayant une valeur mesurée obtenue du premier élément de capteur (321) de la deuxième paire de capteurs (32) d'une valeur mesurée obtenue du deuxième élément de capteur (322) de la deuxième paire de capteurs (32), pour éliminer une interférence d'un champ magnétique externe, et pour déterminer la position angulaire du rotor (4) par rapport au stator (5) à partir du rapport des valeurs différentielles.

2. Agencement de capteurs (1) selon la revendication 1, dans lequel la distance radiale entre les deux éléments de capteur (311, 312) de la première paire de capteurs (31) correspond à la distance radiale entre les deux éléments de capteur (321, 322) de la deuxième paire de capteurs (32).

3. Agencement de capteurs (1) selon l'une des revendications précédentes, dans lequel le premier élément de capteur (311) de la première paire de capteurs (31) présente la même distance radiale par rapport à l'axe de rotation (A) que le premier élément de capteur (321) de la deuxième paire de capteurs (32) et/ou que le deuxième élément de capteur (312) de la première paire de capteurs (31) présente la même distance par rapport à l'axe de rotation (A) que le deuxième élément de capteur (322) de la deuxième paire de capteurs (32).

4. Agencement de capteurs (1) selon l'une des revendications précédentes, dans lequel l'aimant (2) est conçu comme un aimant multipolaire (2) ayant au moins deux, en particulier au moins quatre pôles magnétiques pour fournir un champ magnétique dont l'intensité de champ magnétique est périodique avec une longueur de période $\tau$ en fonction

d'un angle de rotation autour de l'axe de rotation (A).

5. Agencement de capteurs (1) selon la revendication 4, dans lequel l'angle de rotation ($\beta$) par lequel les droites (313, 323) des deux paires de capteurs (31, 32) sont espacées l'une de l'autre est $\dfrac{\pi}{N}$, où N est le nombre de pôles de l'aimant (2).

6. Agencement de capteur (1) selon l'une des revendications précédentes, l'aimant (2) étant configuré de telle sorte qu'une composante de champ magnétique d'une direction déterminée d'un champ magnétique généré par l'aimant (2) varie de manière monotone, en particulier linéairement à l'intérieur d'une section de rayon, les éléments de capteur (311, 312, 321, 322) du capteur (3) étant disposés à l'intérieur de la section de rayon.

7. Agencement de capteurs (1) selon l'une des revendications précédentes, dans lequel au moins l'une des paires de capteurs (31, 32) comprend au moins trois éléments de capteur (311, 312, 321, 322) qui se trouvent chacun le long de la droite (313, 323) associée à la paire de capteurs (31, 32) et/ou le capteur (3) comprend au moins trois paires de capteurs (31, 32) à chacune desquelles est affectée une droite (313, 323) le long de laquelle sont disposés les éléments capteurs (311, 312, 321, 322) de la paire de capteurs (31, 32) respective, toutes les droites (313, 323) étant espacées les unes des autres d'un angle de rotation autour de l'axe de rotation (A) et se coupant dans l'axe de rotation (A).

8. Agencement de capteurs (1) selon l'une des revendications précédentes, dans lequel tous les éléments de capteur (311, 312, 321, 322) sont conçus comme des capteurs à effet Hall et délivrent une tension de Hall comme valeur mesurée.

9. Agencement de capteurs (1) selon l'une des revendications précédentes, dans lequel l'unité arithmétique est configurée pour déterminer des valeurs de mesure des éléments de capteur (311, 312, 321, 322) qui sont chacune proportionnelles à une composante de champ du champ magnétique perpendiculaire à l'axe de rotation (A), en particulier proportionnelles à une composante de champ radiale du champ magnétique.

10. Agencement de capteurs (1) selon l'une des revendications précédentes, dans lequel l'unité arithmétique est configurée pour définir la position angulaire basée sur un angle $\alpha$ et pour déterminer l'angle $\alpha$ en utilisant l'équation

$$\frac{U_1}{U_2} = \frac{f\left(\frac{2\pi}{\tau} * \alpha\right)}{f\left(\frac{2\pi}{\tau} * (\alpha + \beta)\right)},$$

où $U_1$ représente la première valeur différentielle, $U2$ représente la deuxième valeur différentielle, $\tau$ représente la longueur de période, $f(\alpha)$ représente une fonction périodique en fonction de la longueur de période $\tau$, et $\beta$ représente l'angle de rotation entre les droites (313, 323) assignées aux deux paires de capteurs (31, 32).

11. Agencement de capteurs (1) selon l'une quelconque des revendications précédentes, dans lequel l'agencement de capteurs (1) comprend le stator (5) et le rotor (4), l'un de ces deux composants (2, 3) étant disposé sur le rotor (4) et l'autre sur le stator (5).

12. Utilisation d'un agencement de capteurs (1) selon l'une des revendications précédentes pour la détermination de la position angulaire du rotor (4) par rapport au stator (5), dans lequel des valeurs de mesure sont lues à partir des éléments de capteur (311, 312, 321, 322) des paires de capteurs (31, 32), dans lequel, pour éliminer une interférence d'un champ magnétique extérieur, une première valeur différentielle est obtenue en soustrayant d'une valeur mesurée d'un deuxième élément de capteur (312) de la première paire de capteurs (31) une valeur mesurée du premier élément de capteur (311) de la première paire de capteurs (31), et une deuxième valeur différentielle est obtenue en soustrayant d'une valeur mesurée du deuxième élément de capteur (322) de la deuxième paire de capteurs (32) une valeur mesurée du premier élément de capteur (321) de la deuxième paire de capteurs (32), la position angulaire étant déterminée à partir du rapport des deux valeurs différentielles.

13. Procédé pour déterminer une position angulaire d'un rotor (4) par rapport à un stator (5) en utilisant un agencement de capteurs (1) comprenant deux composants, à savoir un aimant (2) et un capteur (3), dans lequel l'un des deux composants (2, 3) est disposé sur le rotor (4) et l'autre sur le stator (5), dans lequel le capteur (3) comporte une première et une deuxième paire de capteurs (31, 32) comprenant chacune deux éléments de capteur (311, 312, 321, 322), dans lequel les paires de capteurs (31, 32) sont espacées l'une de l'autre d'un angle de rotation ($\beta$) autour d'un axe de rotation (A) autour duquel le rotor (4) peut tourner par rapport au stator (5), dans lequel des valeurs mesurées qui sont chacune proportionnelles à un champ magnétique présent sur un élément de capteur respectif (311, 312, 321, 322) sont obtenues à partir des éléments de capteur (311, 312, 321, 322), dans lequel chaque élément de capteur (311, 312, 321, 322) est configuré pour déterminer une composante de champ magnétique dans exactement une direction prédéfinie et ainsi chacun des éléments de capteur (311, 312, 321, 322) fournit une valeur mesurée qui est proportionnelle à la composante de champ magnétique dans cette direction, dans lequel, pour éliminer une interférence d'un champ magnétique externe, une première valeur différentielle est obtenue en soustrayant d'une valeur mesurée d'un second élément de capteur (312) de la première paire de capteurs (31) une valeur mesurée du premier élément de capteur (311) de la première paire de capteurs (31), et une seconde valeur différentielle est obtenue en soustrayant d'une valeur mesurée du second élément de capteur (322) de la seconde paire de capteurs (32) une valeur mesurée du premier élément de capteur (321) de la seconde paire de capteurs (32), la position angulaire étant déterminée à partir du rapport des deux valeurs différentielles.

**Figur 1a**

**Figur 1b**

**Figur 1c**

**Figur 1d**

## Figur 2a

N          S   A          N          S          2

0          π          2π          φ

## Figur 2b

N          S   A          N          S          2

↑          ↓          ↑          ↓

0          π          2π          φ

**Figur 3a**

**Figur 3b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014029885 A1
- DE 112007003276 T5
- US 20150022192 A1